# EUROPÄISCHE PATENTSCHRIFT

(11) **EP 1 759 903 B1**
(45) Veröffentlichungstag und Bekanntmachung des Hinweises auf die Patenterteilung: **13.10.2010**
(21) Anmeldenummer: 06017405.9
(22) Anmeldetag: 22.08.2006
(51) Int. Cl.: B60J 5/04

(54) **Tür für ein Kraftfahrzeug**
Vehicle door
Porte de véhicule

(30) Priorität: 06.09.2005 DE 102005042123
(43) Veröffentlichungstag der Anmeldung: 07.03.2007
(73) Patentinhaber: Bayerische Motoren Werke Aktiengesellschaft, 80809 München (DE)
(72) Erfinder: Kramer, Thomas, 83043 Bad Aibling (DE); Zandt, Manfred, 85307 Entrischenbrunn (DE)

(56) Entgegenhaltungen:
- EP-A- 1 241 037
- DE-A1- 2 944 753
- GB-A- 2 399 852
- JP-A- 2003 094 952
- US-A1- 2004 221 514

## Beschreibung

Die Erfindung betrifft eine Tür für ein Kraftfahrzeug gemäß dem Oberbegriff des Anspruchs 1.

Es ist bereits eine Tür für ein Kraftfahrzeug bekannt, bei der zur Abdichtung von Windgeräuschen ein Schaumteil in den Türrohbau eingeklebt ist, dessen Größe der Größe eines Fensterrahmens der Kraftfahrzeugtür entspricht.

Aus der GB-A-2 399 852 ist eine Tür für ein Kraftfahrzeug mit den Merkmalen des Oberbegriffs des neuen Anspruchs 1 bekannt. Zwischen der in den Fahrzeuginnenraum zeigenden Abdeckung des Fensterrahmens und einem unteren Flansch, der durch ein äußeren Profilteil und einem inneren Profilteil gebildet ist, und einem unteren Ende der Fensterdichtung ist ein abgewinkelter Abschnitt der Abdeckung befestigt, ohne dass ein Hohlraum zwischen dem Flansch des Fensterrahmens, der Abdeckung und der Fensterdichtung ausgebildet ist.

Aus der DE 29 44 753 A1 ist eine Kraftfahrzeugtür bekannt, bei der zwischen einer Seitenscheibe und einem Türrahmen ein Gummiwulst angeordnet ist. Ferner ist zwischen dem Türrahmen und einem Seitenpfosten ebenfalls ein Dichtpolster vorgesehen.

Aus der EP-A-1 241 037 ist eine Türdichtung bekannt. In einem Hohlraum der Türdichtung ist ein Schaumstoff vorgesehen. Ferner kann der Schaumstoff zwischen benachbarten Abschnitten einer Türdichtung vorgesehen sein.

Aus der US 2004/221514 A1 ist eine Kraftfahrzeugtür bekannt, bei der entlang einer Türdichtung Schaumstoffteile zur Schallisolierung vorgesehen sind.

Aus der JP 2003 094952 A ist bereits eine Türdichtung mit einem Hohlraum bekannt, wobei der Hohlraum der Türdichtung mit einem schallabsorbierenden Material gefüllt ist.

Aufgabe der Erfindung ist es, eine Tür für ein Kraftfahrzeug zu schaffen, die einen einfachen Aufbau aufweist.

Bei der erfindungsgemäßen Tür für ein Kraftfahrzeug ist an einer Innenfläche einer Abdeckung eines Türrohbaus über die Länge eines abzudichtenden Abschnittes des Türrohbaues ein geeigneter Schaumstoff angeordnet, der einen vorbestimmten Querschnitt und die erforderlichen Dichteigenschaften aufweist. Durch den Schaumstoff können auftretende Rohbauspalte in einfacher Weise abgedichtet werden. Aufgrund des Schaumstoffes ist eine reproduzierbare Teilequalität möglich.

In einer vorteilhaften Ausführungsform weist der untere Rand der Abdeckung einen abgewinkelten Abschnitt auf, der eine Längsrille oder dergleichen bildet. In der Längsrille der Abdeckung ist zumindest abschnittsweise in akustisch relevanten Bereichen ein Schaumstoff angeordnet, der einen stirnseitigen Rand des unteren Flansches des Hohlprofils des Fensterrahmens zumindest an akustisch gefährdeten Stellen abdichtet.

Vorteilhafterweise besteht die Abdeckung aus einem Kunststoff, wie einem vernetzten Ethylen-Propylen-Kautschuk (EPDM) und der Schaum aus Polyurethan (PU).

In einer vorteilhaften Ausführungsform erfolgt die Anordnung des Schaumstoffes durch Einbringen einer Schaumraupe über ein Werkzeug, beispielsweise über ein Spritzwerkzeug mit einer Düse, auf die betreffende Innenfläche der Abdeckung.

Eine Ausführungsform der Erfindung wird nachstehend anhand der Zeichnungen beispielshalber beschrieben. Dabei zeigen:
- Fig. 1: eine Seitenansicht einer teilweise dargestellten Seitenwand einer Kraftfahrzeugkarosserie, die eine vordere und hintere Seitentür aufweist,
- Fig. 2: eine Querschnittsansicht eines Fensterrahmens der in der Fig. 1 gezeigten vorderen Seitentür längs der Linie II-II in der Fig. 1 und
- Fig. 3: den in der Fig. 2 gezeigten Querschnitt des Fensterrahmens vor der Montage einer mit einer Schaumraupe versehenen Kunststoffabdeckung.

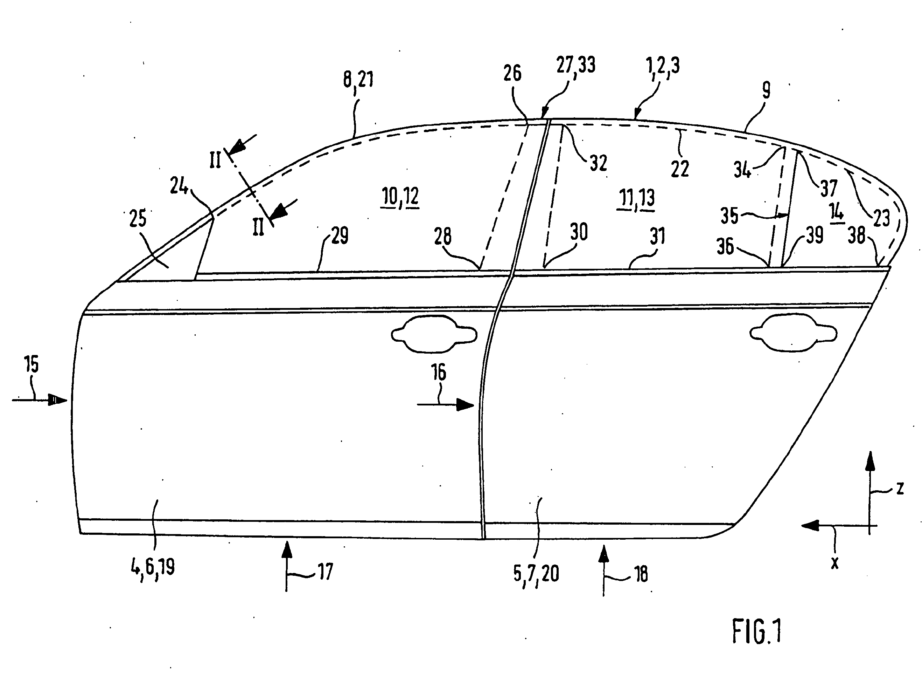

Die Fig. 1 zeigt eine teilweise dargestellte Seitenwand 3 einer Karosserie 2 eine Kraftfahrzeuges. Die Seitenwand 3 weist eine vordere Seitentür 4 und eine hintere Seitentür 5 auf. Die vordere und die hintere Seitentür 4, 5 bestehen jeweils aus einem Türkörper 6, 7 und einem an den Türkörper 6, 7 sich anschließenden Fensterrahmen 8, 9. Der jeweilige Fensterrahmen 8, 9 begrenzt eine Fensteröffnung 10, 11 für ein absenkbares Seitenfenster 12, 13. Bei der hinteren Seitentür 5 ist zusätzlich ein feststehendes Seitenfenster 14 eingebaut.

Pfeile 15, 16 in Fahrzeuglängsrichtung x und Pfeile 17, 18 in vertikaler Richtung z symbolisieren Fugen oder Öffnungen, durch die Fahrtwind in einen jeweiligen Hohlraum 19, 20 des betreffenden Türkörpers 6, 7 eindringen kann. Der eindringende Fahrtwind kann an Austrittsstellen am Türkörper 6, 7 und am Fensterrahmen 8, 9 zu Windgeräuschen führen.

In der Fig. 1 ist bei der vorderen Seitentür 4 und bei der hinteren Seitentür 5 in strichlierten Linien der abgedichtete Bereich der Fensterrahmen 8, 9 gezeigt. Die abgedichteten Bereiche betreffen einen Abschnitt 21 am vorderen Fensterrahmen 8, einen Abschnitt 22 für das absenkbare Seitenfenster 13 und einen Abschnitt 23 für das feststehende Seitenfenster 14 des hinteren Fensterrahmens 9.

Am vorderen Fensterrahmen 8 verläuft der abgedichtete Abschnitt 21 ab einem oberen Ende 24 einer dreieckförmigen Befestigungsfläche 25 für einen Spiegel parallel zu einem nicht dargestellten Dachrahmen bis zu einem oberen Ende 26 des Fensterrahmens 8 vor einem oberen Ende 33 einer B-Säule 27. Danach erstreckt sich der abgedichtete Abschnitt 21 vom oberen Ende 26 des vorderen Fensterrahmens 8 parallel zur B-Säule 27 bis zu einem unteren Ende 28 des vorderen Fensterrahmens 8 in Höhe eines oberen Randes 29 des Türkörpers 6. Der obere Rand 29 des Türkörpers 6 weist eine Aufnahmeöffnung für das absenkbare Seitenfenster 12 in den Hohlraum 19 des Türkörpers 6 der vorderen Seitentür 4 auf.

Bei der hinteren Seitentür 5 verläuft der abgedichtete Abschnitt 22 U-förmig von einem unteren Ende 30 in Höhe eines oberen Randes 31 des Türkörpers 7 bis zu einem oberen Ende 32 des hinteren Fensterrahmens 9 in Höhe eines oberen Endes 33 der B-Säule 27. Der obere Rand 31 des Türkörpers 7 weist eine Aufnahmeöffnung für das absenkbare Seitenfenster 13 in den Hohlraum 20 des Türkörpers 7 der hinteren Seitentür 5 auf. Von dem oberen, vorderen Ende 32 des Fensterrahmens 9 erstreckt sich der abgedichtete Abschnitt 22 bis zu einem oberen, hinteren Ende 34 des hinteren Fensterrahmens 9 in Höhe einer in etwa senkrecht verlaufenden Fensterführung 35 für das hintere, absenkbare Seitenfenster 13. Vom oberen, hinteren Ende 34 verläuft der abgedichtete Abschnitt 22 parallel zur Fensterführung 35 vertikal nach unten bis zu einem unteren Ende 36 des Abschnittes 22 in Höhe des oberen Randes 31.

In Höhe des oberen, hinteren Endes 34 des Abschnittes 22 schließt sich in der gezeigten Ausführungsform einstückig ein oberes Ende 37 eines abgedichteten Abschnittes 23 an, der sich bis zu einem unteren Ende 38 eines oberen Randes 39 des Türkörpers 7 der hinteren Seitentür 5 erstreckt.

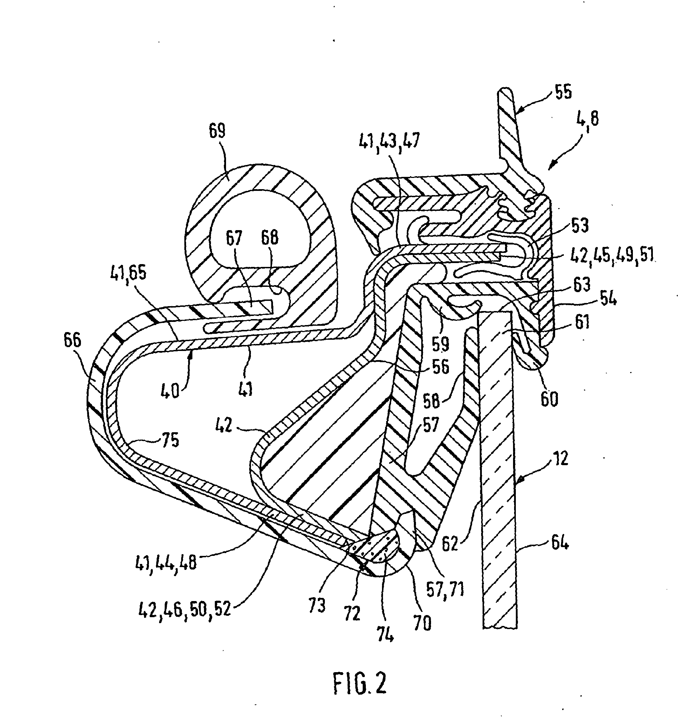

Die Fig. 2 zeigt eine Schnittansicht des vorderen Fensterrahmens 8 der vorderen Seitentür 4 in Höhe des in der Fig. 1 gezeigten Schnittes II-II. Bei der Darstellung der Fig. 2 befindet sich das Seitenfenster 12 in seiner Schließstellung.

Der Fensterrahmen 8 weist ein Hohlprofil 40 auf, das in der gezeigten Ausführungsform aus einem inneren Blech oder Profilteil 41 und aus einem äußeren Blech oder Profilteil 42 besteht. An den Enden 43, 44 des inneren Profilteiles 41 und an den Enden 45, 46 des äußeren Profilteiles 42 sind jeweils Flansche 47, 48 und Flansche 49, 50 ausgebildet, die mit dem jeweils dazu gegenüberliegenden Flansch miteinander verbunden sind. Durch die Verbindung der Flansche 47 und 49 ergibt sich ein nach außen zeigender, oberer Flansch 51. Durch die Verbindung der Flansche 48, 50 ergibt sich ein nach außen zeigender, unterer Flansch 52.

An dem oberen Flansch 51 des Fensterrahmens 8 ist über ein Befestigungselement 53 eine Blende 54 befestigt. An der Blende 54 ist in Richtung eines Dachrahmens eine Fugendichtung 55 angeordnet. Die Fugendichtung 55 dichtet einen Spalt zwischen dem Fensterrahmen 8 der vorderen Seitentür 4 und dem Dachrahmen ab.

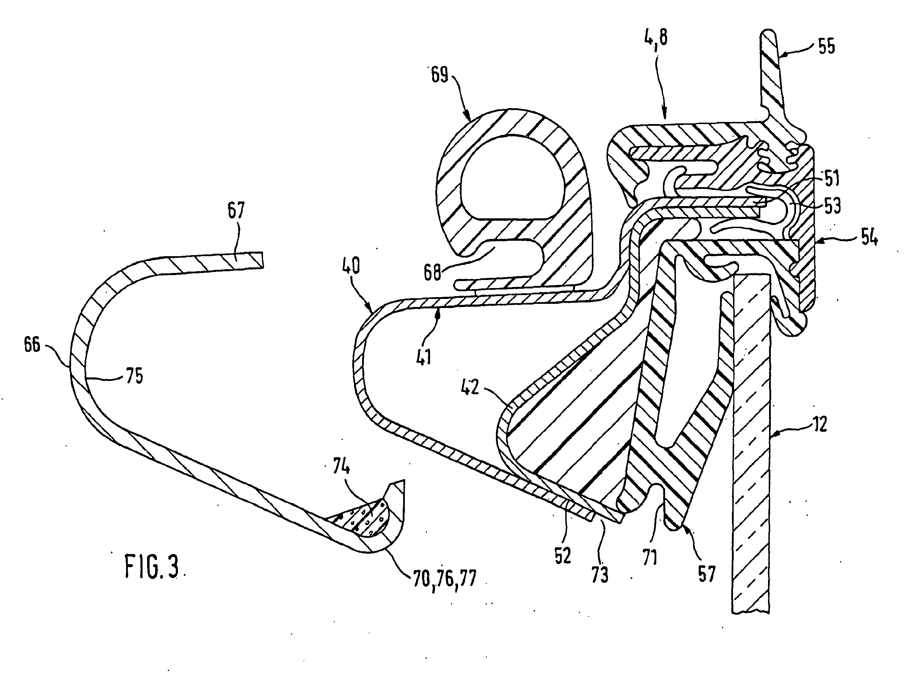

An einer Außenfläche 56 des äußeren Profilteils 42 ist eine Fensterdichtung 57 mit beispielsweise drei Dichtlippen 58, 59, 60 vorgesehen. Die Dichtlippen 58, 59, 60 umgeben einen oberen Rand 61 des vorderen Seitenfensters 12. In den Figuren 2 und 3 befindet sich das Seitenfenster 12 jeweils in der Schließstellung. Die Dichtlippe 58 liegt an einer Innenfläche 62 des Seitenfensters 12, die Dichtlippe 59 an einem Innenrand oder einer Stirnseite 63 des Seitenfensters 12 und die Dichtlippe 60 an einer Außenfläche 64 des Seitenfensters 12 an. Die Dichtlippen 58, 59, 60 der Fensterdichtung 57 bilden somit eine Führung für das Seitenfenster 12.

Eine Außenfläche 65 des inneren Profilteils 41 ist zumindest im sichtbaren Bereich von einer Abdeckung 66 umgeben. Ein oberer Rand 67 der Abdeckung 66 ist in einer Aufnahmeöffnung 68 einer Türdichtung 69 befestigt. Ein unterer Rand 70 der Abdeckung 66 ist in einer Aufnahmeöffnung 71 der Fensterdichtung 57 befestigt.

Am unteren Flansch 52 ist in der gezeigten Ausführungsform das innere Profilteil 41 an seinem unteren Ende 44 kürzer als das gegenüberliegende Ende 46 des äußeren Profilteils 42. Dadurch wird ein zur Verfügung stehender Hohlraum 72 vergrößert. Ferner wird dadurch bei der Montage der Abdeckung 66 ein Abscheren eines an der Abdeckung 66 befindlichen Schaums 74 durch den Flansch 52 vermieden. Im montierten Zustand der Abdeckung 66 ist der Hohlraum 72 zwischen einem Außenrand 73 des Flansches 52, der Fensterdichtung 57 und der Abdeckung 66 mit dem Schaum 74 ausgefüllt, der zur akustischen Abdichtung dient.

Die Fig. 3 zeigt den in der Fig. 2 dargestellten Fensterrahmen 8 vor der Montage der Abdeckung 66. Die Abdeckung 66 weist in der gezeigten Ausführungsform an ihrem unteren Rand 70 einen abgewinkelten oder hakenförmigen Querschnitt 76 auf, der eine Längsrille 77 bildet. An einer Innenfläche 75 der Längsrille 77 ist der Schaum 74 aufgebracht.

## Patentansprüche

1. Tür (4, 5) für ein Kraftfahrzeug (1), mit einem Türkörper (6, 7), mit einem sich an den Türkörper (6, 7) anschließenden Fensterrahmen (8, 9), der eine Öffnung (10, 11) für mindestens ein Seitenfenster (12, 13) umgibt, wobei der Fensterrahmen (8, 9) ein Profil (41, 42) mit einem Hohlraum aufweist, wobei ein vorderes Ende (24) des Fensterrahmens (8, 9) an einem vorderen Ende eines oberen Randes (29, 31) des Türkörpers (6, 7) angeordnet ist und ein hinteres, unteres Ende (28) des Fensterrahmens (8, 9) an einem hinteren Ende des oberen Randes (29, 31) des Türkörpers (6, 7) vorgesehen ist, wobei am oberen Rand (29, 31) des Türkörpers (6, 7) eine Aufnahmeöffnung für ein absenkbares Seitenfenster (12, 13) in einen im Türkörper (6, 7) ausgebildeten Hohlraum (19, 20) ausgebildet ist, mit einer Abdeckung (66), die eine in einen Fahrzeuginnenraum zeigende Außenfläche (65) des Fensterrahmens (40, 41, 42) abdeckt, wobei die Abdeckung (66) einen offenen Querschnitt aufweist, wobei die Abdeckung (66) mit ihrem unteren Ende (70) an einem Flansch (52) eines Hohlprofils (40) des Fensterrahmens (8, 9) befestigt ist, wobei das Hohlprofil (40) aus einem inneren Profilteil (41) und aus einem äußeren Profilteil (42) besteht, wobei an den Enden (43, 44) des inneren Profilteiles (41) und an den Enden (45, 46) des äußeren Profilteiles (42) jeweils Flansche (41, 47, 48; 42, 49, 50) ausgebildet sind, die mit dem jeweils dazu gegenüberliegenden Flansch miteinander verbunden sind, wobei eine Außenfläche (65) des inneren Profilteils (41) zumindest im sichtbaren Bereich von der Abdeckung (66) umgeben ist, wobei sich durch die Verbindung der Flansche (48, 50) der Profilteile (41, 42) ein unterer Flansch (52) ergibt, **dadurch gekennzeichnet, dass** ein unterer Rand (70) der Abdeckung (66) in einer Aufnahmeöffnung (71) einer Fensterdichtung (57) befestigt ist, dass ein Hohlraum (72) zwischen einem Außenrand (73) des Flansches (48, 50; 52), der Fensterdichtung (57) und der Abdeckung (66) im montierten Zustand der Abdeckung (66) ausgebildet ist, dass der Hohlraum (72) mit einem Schaumstoff (74) ausgefüllt ist, und dass an einer Innenfläche (75) der Abdeckung (66) für den Fensterrahmen (8, 9) über die Länge eines abzudichtenden Abschnittes (21, 22, 23) des Fensterrahmens (8, 9) der geeignete Schaumstoff (74) angeordnet ist, der einen vorbestimmten Querschnitt und die erforderlichen akustischen Dichteigenschaften aufweist.

2. Tür nach Anspruch 1,
**dadurch gekennzeichnet, dass** der untere Rand (70) der Abdeckung (66) einen abgewinkelten Abschnitt (76) aufweist, der eine Längsrille oder dergleichen (77) bildet, dass in der Längsrille (77) der Abdeckung (66) zumindest abschnittsweise in akustisch relevanten Bereichen ein Schaumstoff (74) angeordnet ist, der einen stirnseitigen Rand (78) des unteren Flansches (52) des Hohlprofils (40) des Fensterrahmens (8, 9) zumindest an akustisch gefährdeten Stellen abdichtet.

3. Tür nach den Ansprüchen 1 oder 2,
**dadurch gekennzeichnet, dass** die Abdeckung (66) ein Kunststoff ist.

4. Tür nach einem der vorhergehenden Ansprüche,
**dadurch gekennzeichnet, dass** die Abdeckung (66) aus EPDM hergestellt ist und der Schaumstoff (74) ein PU-Schaum ist.

5. Tür nach einem der vorhergehenden Ansprüche,
**dadurch gekennzeichnet, dass** der Schaumstoff (74) in der Längsrille (77) der Abdeckung (66) über ein Spritzwerkzeug in Form einer Schaumraupe auf die Innenfläche (75) der Längsrille (77) aufgetragen ist.

## Claims

1. A door (4, 5) for a motor vehicle (1), with a door body (6, 7), with a window frame (8, 9) which adjoins the door body (6, 7) and surrounds an opening (10, 11) for at least one side window (12, 13), wherein the window frame (8, 9) has a profile (41, 42) with a cavity, wherein a front end (24) of the window frame (8, 9) is arranged on a front end of an upper edge (29, 31) of the door body (6, 7) and a rear, lower end (28) of the window frame (8, 9) is provided on a rear end of the upper edge (29, 31) of the door body (6, 7), wherein at the upper edge (29, 31) of the door body (6, 7), a receiving opening is formed for a side window (12, 13) which can be lowered into a cavity (19, 20) formed in the door body (6, 7), with a cover (66), which covers an outer face (65) of the window frame (40, 41, 42) pointing into a vehicle interior, wherein the cover (66) has an open cross-section, the cover (66) being fastened by its lower end (70) to a flange (52) of a hollow profile (40) of the window frame (8, 9), wherein the hollow profile (40) comprises an inner profile part (41), and of an outer profile part (42), flanges (41, 47, 48; 42, 49, 50) being formed at the ends (43, 44) of the inner profile part (41) and at the ends (45, 46) of the outer profile part (42), in each case, which flanges are connected to one another by the respective flange opposing it, an outer face (65) of the inner profile (41) being surrounded by the cover (66) at least in the visible region, a lower flange (52) being produced by the connection of the flanges (48, 50) of the profile parts (41, 42), **characterised in that** a lower edge (70) of the cover (66) is fastened in a receiving opening (71) of a window seal (57), **in that** a cavity (72) is formed between an outer edge (73) of the flange (48, 50; 52) of the window seal (57) and the cover (66), when the cover (66) is in the assembled state, **in that** the cavity (72) is filled with a foam (74), and **in that** the suitable foam (74), which has a predetermined cross-section and the required acoustic sealing properties, is arranged on an inner face (75) of the cover (66) for the window frame (8, 9) over the length of a portion (21, 22, 23) of the window frame (8, 9) to be sealed.

2. A door according to claim 1, **characterised in that** the lower edge (70) of the cover (66) has an angled portion (76), which forms a longitudinal groove or the like (77), **in that** a foam (74), which seals an end edge (78) of the lower flange (52) of the hollow profile (40) of the window frame (8, 9) at least at acoustically at risk points, is arranged in the longitudinal groove (77) of the cover (66), at least in portions in acoustically relevant regions.

3. A door according to claims 1 or 2, **characterised in that** the cover (66) is a plastics material.

4. A door according to any one of the preceding claims, **characterised in that** the cover (66) is made from EPDM and the foam (74) is a polyurethane foam.

5. A door according to any one of the preceding claims, **characterised in that** the foam (74) in the longitudinal groove (77) of the cover (66) is applied by means of a spray tool in the form of a foam track on the inner face (75) of the longitudinal groove (77).

## Revendications

1. Porte (4, 5) de véhicule automobile (1) comportant un corps de porte (6, 7) avec un châssis de fenêtre (8, 9) adjacent au corps de porte (6, 7), ce châssis entourant une ouverture (10, 11) pour recevoir au moins une vitre latérale (12, 13),
- le châssis de fenêtre (8, 9) ayant un profil (41, 42) avec une cavité,
- l'extrémité avant (24) du châssis de fenêtre (8, 9) étant prévue à l'extrémité avant du bord supérieur (29, 31) du corps de porte (6, 7), et l'extrémité arrière inférieure (28) du châssis de fenêtre (8, 9) étant prévue à l'extrémité arrière du bord supérieur (29, 31) du corps de porte (6, 7),
- le bord supérieur (29, 31) du corps de porte (6, 7) comporte une ouverture de réception pour une vitre latérale (12, 13) escamotable dans une cavité (19, 20) réalisée dans le corps de porte (6, 7),
- un recouvrement (66) couvrant la surface extérieure (65) du châssis de fenêtre (40, 41, 42) tournée vers l'habitacle du véhicule,
- le recouvrement (66) ayant une section ouverte,
- le recouvrement (66) étant fixé par son extrémité inférieure (70) à une bride (52) d'un profil creux (40) du châssis de fenêtre (8, 9),
- le profil creux (40) se compose d'une partie intérieure de profil (41) et d'une partie extérieure de profil (42),
- des brides (41, 47, 48; 42, 49, 50) respectives étant réalisées aux extrémités (43, 44) de la partie intérieure de profil (41) et aux extrémités (45, 46) de la partie extérieure de profil (42), ces brides étant reliées à la bride opposée qui lui correspond respectivement,
- la surface extérieure (65) de la partie intérieure de profil (41), étant entourée du revêtement (66) au moins dans sa partie visible,
- la liaison des brides (48, 50) des parties de profil (41, 42) formant une bride inférieure (52),
**caractérisée en ce que**
- le bord inférieur (70) du recouvrement (66) est fixé dans une rainure de réception (71) d'un joint de fenêtre (57),
- une cavité (72) est réalisée entre le bord extérieur (73) de la bride (48, 50; 52) du joint de fenêtre (57) et le recouvrement (66) lorsque le recouvrement (66) est installé,
- la cavité (72) est remplie d'une mousse (74), et
- la mousse (74) appropriée est prévue sur la surface intérieure (75) du recouvrement (66) pour le châssis de fenêtre (8, 9), sur la longueur d'un segment (21, 22, 23) pour rendre étanche le châssis de fenêtre (8, 9), mousse qui a une section prédéfinie et des propriétés d'isolation phonique appropriées.

2. Porte selon la revendication 1,
**caractérisée en ce que**
- le bord inférieur (70) du recouvrement (66) a un segment recourbé (76) qui forme une goulotte longitudinale ou un moyen analogue (77),
- la goulotte longitudinale (77) du recouvrement (66) comporte de la mousse (74) au moins par segments dans les zones concernées par l'acoustique, cette mousse rendant étanche le bord, côté frontal (78) de la bride inférieure (52) du profil creux (40) du châssis de fenêtre (8, 9), au moins aux endroits à risque acoustique.

3. Porte selon la revendication 1 ou 2,
**caractérisée en ce que**
le recouvrement (66) est une matière plastique.

4. Porte selon l'une des revendications précédentes,
**caractérisée en ce que**
le recouvrement (66) est fabriqué en EPDM et la mousse (74) est une mousse PU.

5. Porte selon l'une des revendications précédentes,
**caractérisée en ce que**
la mousse (74) est appliquée dans la rainure longitudinale (77) du recouvrement (66) à l'aide d'un outil d'injection sous la forme d'un cordon de mousse sur la surface intérieure (75) de la rainure longitudinale (77).
